# FASCICULE DE BREVET EUROPEEN

(11) **EP 4 035 994 B1**
(45) Date de publication et mention de la délivrance du brevet: **13.03.2024**
(21) Numéro de dépôt: 22153577.6
(22) Date de dépôt: 27.01.2022
(51) Int. Cl.: B64C 1/20, B64D 11/06

(54) **RAIL D'ANCRAGE HYBRIDE POUR PLANCHER D'AÉRONEF**
HYBRIDE VERANKERUNGSSCHIENE FÜR FLUGZEUGBODEN
HYBRID ANCHORING RAIL FOR FLOOR OF AN AIRCRAFT

(30) Priorité: 29.01.2021 FR 2100860
(43) Date de publication de la demande: 03.08.2022
(73) Titulaire: AIRBUS OPERATIONS (S.A.S.), 31060 Toulouse (FR)
(72) Inventeur: VASSILAKAKIS, Giuseppe, 31060 TOULOUSE (FR)
(74) Mandataire: Jardel, Marc Henry Philippe

(56) Documents cités:
- WO-A1-2010/097221
- DE-A1-102015 100 189
- FR-A1- 3 089 948
- US-A1- 2006 088 725

## Description

### Domaine technique

La présente invention concerne un rail d'ancrage pour plancher d'aéronef, du type comprenant une semelle supérieure comprenant une glissière destinée à l'ancrage d'éléments tels que des sièges ou des conteneurs de fret, et deux ailes agencées de part et d'autre de la glissière et destinées à supporter des panneaux de plancher, et comprenant en outre une structure de raidissement inférieure raccordée à la semelle supérieure.

### État de la technique antérieure

Au sein des aéronefs, les rails d'ancrage destinés à être intégrés aux planchers sont soumis aux phénomènes de corrosion du fait de la présence d'air et d'humidité dans leur environnement.

Il est connu de protéger de tels rails contre la corrosion au moyen d'un enrobage des rails par d'une couche de silicone, matériau mou facilement rayable, ou au moyen d'une couche de peinture, par nature très fine (typiquement 100 microns environ). Dans les deux cas, la protection offerte contre la corrosion se révèle donc limitée dans le temps.

Il est également connu d'utiliser un matériau ayant une bonne résistance à la corrosion en tant que matériau constitutif de tels rails. Cette solution présente toutefois un coût considérable.

Le document US2006088725 A1 décrit un rail d'ancrage pour plancher d'aéronef selon le préambule de la revendication 1.

### Exposé de l'invention

L'invention a pour objet un rail d'ancrage du type ci-dessus qui présente une bonne résistance à la corrosion qui soit durable dans le temps, tout en étant d'un coût limité.

L'invention propose à cet effet un rail d'ancrage pour plancher d'aéronef, comprenant :
- une semelle supérieure comprenant une glissière destinée à l'ancrage d'éléments de fixation, et deux ailes agencées de part et d'autre de la glissière et destinées à supporter des panneaux de plancher, et
- une structure de raidissement inférieure raccordée à la semelle supérieure.

Selon l'invention, le rail d'ancrage est formé :
- d'une poutre, formée au moins d'un corps réalisé en un premier matériau, et définissant la structure de raidissement inférieure et une plateforme supérieure ; et
- d'une protection anticorrosion recouvrant intégralement une face supérieure de la plateforme supérieure de sorte que la protection anticorrosion et la plateforme supérieure constituent ensemble la semelle supérieure du rail, la protection anticorrosion étant au moins formée d'une feuille de protection, un élément solide relativement dur et rigide disposé sur la plate-forme supérieure, réalisée en un deuxième matériau plus résistant à la corrosion que le premier matériau, et s'étendant de manière continue d'une extrémité libre latérale de l'une des ailes jusqu'à une extrémité libre latérale de l'autre aile, moyennant quoi la feuille de protection recouvre un fond et deux flancs, opposés l'un à l'autre, de la glissière.

La configuration de la protection anticorrosion permet une protection efficace et durable du rail contre la corrosion, tout en permettant de limiter le coût global du rail.

Dans des modes de réalisation de l'invention, le premier matériau est de l'aluminium ou un alliage d'aluminium et/ou dans lequel le deuxième matériau est choisi parmi le titane ou un alliage de titane, et un acier inoxydable.

Dans des modes de réalisation de l'invention, la plateforme supérieure de la poutre et la protection anticorrosion présentent au moins une paire d'orifices respectifs alignés définissant conjointement un passage traversant s'étendant au travers de la semelle supérieure du rail pour un organe de fixation.

Dans des modes de réalisation de l'invention, le rail comprend une douille de protection anticorrosion logée au moins dans l'orifice de la plateforme supérieure de la poutre et délimitant au moins un segment du passage traversant.

Dans des modes de réalisation de l'invention, la douille de protection anticorrosion est encastrée dans la plateforme supérieure et couverte par une partie de la protection anticorrosion formant un pourtour de l'orifice de la protection anticorrosion.

En variante, la douille de protection anticorrosion peut s'étendre au travers de la protection anticorrosion.

Dans des modes de réalisation de l'invention, la poutre comprend en outre un revêtement anticorrosion qui recouvre l'intégralité du corps de la poutre, moyennant quoi le revêtement anticorrosion est intercalé entre le corps de la poutre et la protection anticorrosion au niveau de la semelle supérieure.

Dans des modes de réalisation de l'invention, la protection anticorrosion comprend en outre une couche de liaison intercalée entre au moins une partie de la feuille de protection et au moins une partie de la plateforme supérieure de la poutre.

La couche de liaison est avantageusement formée d'au moins l'un parmi un mastic, une colle, et un scotch double face.

Dans des modes de réalisation de l'invention, au moins un bord latéral de la plateforme supérieure de la poutre est protégé contre la pénétration de fluides corrosifs entre la plateforme supérieure et la couche de protection anticorrosion au moyen d'un agent d'étanchéité disposé :
- soit dans un espace ménagé entre la protection anticorrosion et la plateforme supérieure, du fait que le bord latéral forme un arrondi à une jonction entre la face supérieure de la plateforme et un chant correspondant de la plateforme, ou forme un arrondi sur l'intégralité d'un chant de la plateforme ;
- soit sous la forme d'un dépôt de matière rapporté sur un chant plat formé conjointement par le bord latéral de la plateforme supérieure et un bord latéral correspondant de la protection anticorrosion ;
- soit sous la forme d'un dépôt de matière, qui est rapporté sur un chant plat formé au moins par le bord latéral de la plateforme supérieure, et qui s'étend jusqu'à une face inférieure d'un bord latéral de la feuille de protection de la protection anticorrosion se prolongeant en surplomb au-delà dudit chant plat.

Dans des modes de réalisation de l'invention, la plateforme supérieure présente au moins un bord latéral formant un arrondi à une jonction entre la face supérieure de la plateforme et un chant correspondant de la plateforme, ledit arrondi étant recouvert par un bord tombé de la couche de protection anticorrosion.

Dans des modes de réalisation de l'invention, le fond et les flancs de la glissière sont agencés en retrait vers un côté inférieur du rail par rapport aux ailes de la semelle.

En variante, les flancs de la glissière peuvent être agencés en saillie vers un côté supérieur du rail par rapport aux ailes de la semelle.

L'invention concerne également un plancher pour aéronef, comprenant des panneaux, et au moins un rail du type décrit ci-dessus dont les ailes de la semelle supérieure supportent les panneaux.

L'invention concerne également un aéronef, comprenant au moins un plancher du type décrit ci-dessus, et au moins un élément de fixation ancré dans la glissière du rail.

L'invention concerne également un procédé de fabrication d'un rail d'ancrage pour plancher d'aéronef du type décrit ci-dessus, comprenant au moins les étapes suivantes :
- A) mettre à disposition la poutre, formée au moins du corps réalisé en le premier matériau et définissant la structure de raidissement inférieure et la plateforme supérieure, ou mettre à disposition une quantité du premier matériau adaptée à une réalisation ultérieure de la poutre ;
- B) mettre à disposition la feuille de protection réalisée en le deuxième matériau plus résistant à la corrosion que le premier matériau ; puis
- C) réaliser la semelle au moyen de la feuille de protection, et de la poutre ou d'une partie au moins de ladite quantité du premier matériau.

Dans des modes de réalisation de l'invention, l'étape C comprend au moins :
- c2-i) préformer, par une technique de roulage, la feuille de protection de sorte à lui faire adopter une forme comprenant une partie médiane délimitée latéralement par deux bourrelets opposés s'étendant en saillie vers un premier côté par rapport à la partie médiane et se prolongeant respectivement par deux lames terminales en vis-à-vis l'une de l'autre s'étendant en direction d'un second côté opposé au premier côté ; puis
- c2-iii) plier la feuille de protection ainsi préparée de manière à ramener les lames terminales dans une configuration parallèle à une partie centrale de la partie médiane.

Dans des modes de réalisation de l'invention, l'étape A comprend la mise à disposition de la poutre, et l'étape C comprend :
- c2-iv) appliquer et fixer la feuille de protection sur la plateforme supérieure, en donnant une forme définitive à la feuille de protection au moyen d'une technique d'élastoformage ou au moyen d'une technique d'hydroformage.

Dans d'autres modes de réalisation de l'invention, l'étape A comprend la mise à disposition de ladite quantité du premier matériau, et l'étape C comprend la formation de la poutre par un procédé de métallurgie dans lequel la feuille de protection joue le rôle de matrice.

### Brève description des dessins

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
La figure 1 est une vue schématique de côté d'un aéronef ;
La figure 2 est une vue schématique en perspective d'un rail d'ancrage d'un type connu ;
La figure 3 est une vue schématique en perspective d'un rail d'ancrage d'un autre type connu ;
La figure 4 est une vue schématique en coupe transversale d'un rail d'ancrage selon l'invention ;
La figure 4A est une vue à plus grande échelle d'une partie de la figure 4 ;
La figure 4B est une vue semblable à la figure 4A illustrant une variante de réalisation de l'invention ;
La figure 4C est une vue semblable à la figure 4A illustrant une autre variante de réalisation de l'invention ;
La figure 4D est une vue semblable à la figure 4A illustrant encore une autre variante de réalisation de l'invention ;
La figure 4E est une vue semblable à la figure 4A illustrant encore une autre variante de réalisation de l'invention ;
La figure 4F est une vue à plus grande échelle d'une autre partie de la figure 4 ;
La figure 4G est une vue semblable à la figure 4F illustrant une variante de réalisation de l'invention ;
La figure 5 est une vue schématique partielle en coupe transversale d'un plancher d'aéronef selon un premier mode de réalisation particulier de l'invention, illustrant notamment un rail d'ancrage d'un premier type ;
La figure 6 est une vue schématique partielle en coupe transversale d'un plancher d'aéronef selon un deuxième mode de réalisation particulier de l'invention, illustrant notamment un rail d'ancrage d'un deuxième type ;
La figure 7 illustre une étape d'un procédé de fabrication d'un rail d'ancrage pour plancher d'aéronef selon un mode de réalisation préféré de l'invention ;
La figure 8 illustre une étape subséquente du procédé de fabrication ;
La figure 9 illustre une étape subséquente du procédé de fabrication ;
La figure 10 illustre une étape subséquente du procédé de fabrication ;
La figure 11 illustre une étape subséquente du procédé de fabrication ;
La figure 12 illustre une étape d'un procédé de fabrication d'un rail d'ancrage pour plancher d'aéronef selon un autre mode de réalisation préféré de l'invention.

Dans l'ensemble de ces figures, des références identiques peuvent désigner des éléments identiques ou analogues.

### Exposé détaillé de modes de réalisation préférés

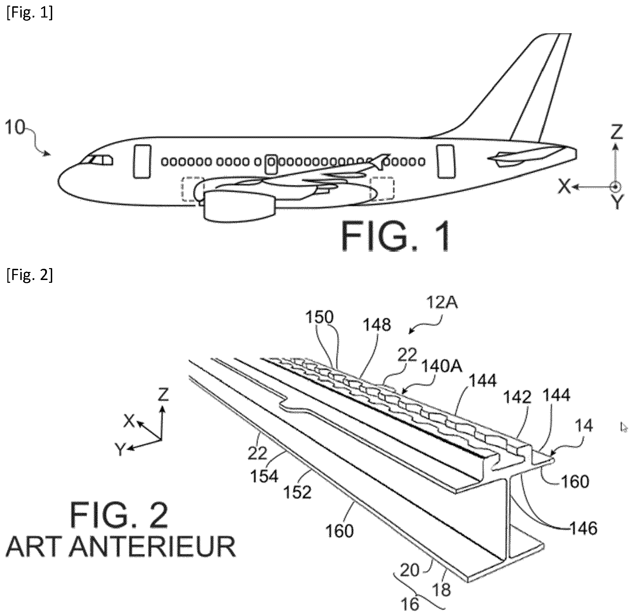

La figure 1 illustre un aéronef 10, par exemple un avion du type destiné au transport commercial de passagers ou de fret, comprenant un plancher formé d'un ensemble de panneaux de plancher reposant sur une structure formée d'un ensemble de rails et de traverses. Certains des rails, appelés rails d'ancrage, présentent chacun une semelle supérieure pourvue d'une glissière dans laquelle sont retenus des éléments de fixation de sièges ou de conteneurs de fret par exemple, et de deux ailes agencées de part et d'autre de la glissière et sur lesquelles reposent des panneaux du plancher. Ces rails comportent en outre chacun une structure de raidissement inférieure raccordée à la semelle supérieure.

Dans la présente description, la direction verticale Z, les côtés « supérieur » et « inférieur », de même que les directions « haut » et « bas », sont définis de manière conventionnelle par référence à l'orientation de l'aéronef lorsque celui-ci est au sol. Les directions X et Y sont orientées orthogonalement à la direction verticale Z de manière à définir un référentiel orthonormé. En particulier, la direction X est définie en tant que direction longitudinale des rails, et la direction Y est définie en tant que direction transversale.

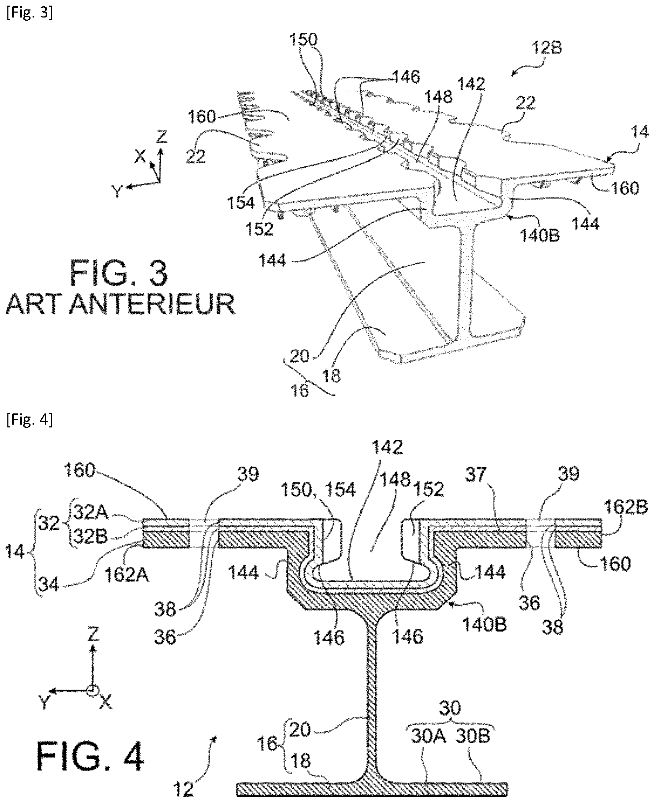

Les figures 2 et 3 illustrent respectivement des rails d'ancrage 12A, 12B selon deux configurations connues. Ces figures permettent d'apercevoir la semelle supérieure 14 et la structure de raidissement inférieure 16 de chacun des rails 12A et 12B.

Ces deux figures montrent ainsi la glissière 140A, 140B de chacun des rails, qui comporte dans chaque cas un fond 142, et deux flancs 144 opposés l'un à l'autre s'étendant en saillie vers le haut à partir du fond 142. Les deux flancs 144 présentent des extrémités libres respectives recourbées l'une en direction de l'autre de manière à former des lèvres de rétention 146, séparées l'une de l'autre de manière à ménager une ouverture 148 de la glissière entre des bords 150 respectifs des lèvres de rétention 146. L'ouverture 148 de la glissière est ainsi de section transversale plus étroite qu'une section transversale interne maximale de la glissière, définie entre l'ouverture 148 et le fond 142, de manière à permettre la rétention d'éléments de fixation de sièges ou de conteneurs de fret ou autres (non représentés sur les figures) au sein de la glissière par effet de butée contre les lèvres de rétention 146. De plus, les bords 150 des lèvres 148 présentent avantageusement une alternance de dents 152 et d'évidements concaves 154 destinés à la rétention des éléments de fixation dans la direction longitudinale de la glissière, de manière connue en soi.

Les figures 2 et 3 montrent en outre les deux ailes 160 agencées de part et d'autre de la glissière pour supporter des panneaux de plancher.

Dans le cas du rail illustré sur la figure 2, la glissière 140A est proéminente, au sens où au moins les flancs 144 de la glissière 140A sont agencés en saillie vers le côté supérieur du rail, par rapport aux ailes 160 de la semelle 14. Dans l'exemple illustré, le fond 142 de la glissière est lui aussi décalé vers le côté supérieur, par rapport aux ailes 160.

En revanche, dans le cas du rail illustré sur la figure 3, la glissière 140B est formée en retrait, au sens où le fond 142 et les flancs 144 de la glissière sont décalés vers un côté inférieur du rail par rapport aux ailes 160 de la semelle 14.

Par ailleurs, la structure de raidissement inférieure 16 de chacun des rails 12A et 12B comporte généralement un talon 18 s'étendant parallèlement à la semelle supérieure 14 et une âme 20 s'étendant orthogonalement à la semelle supérieure 14 et au talon 18 et reliant l'un à l'autre ces deux éléments.

De plus, chacun des rails 12A et 12B comprend typiquement des oreilles 22 s'étendant latéralement en saillie des ailes 160 de la semelle supérieure 14 pour recevoir des organes de fixation de panneaux de plancher.

De tels rails d'ancrage sont habituellement réalisés en aluminium recouvert d'un revêtement anticorrosion prenant la forme d'une fine couche de peinture ou d'une épaisse couche de silicone relativement mou. Un tel revêtement se révèle toutefois relativement fragile, en particulier aisément rayable, et présente par conséquent une efficacité limitée dans le temps, de sorte que des coûts importants sont engendrés par la nécessité de remplacer régulièrement de tels rails.

Pour remédier à ce problème, il a été proposé de réaliser de tels rails en titane afin d'accroître leur résistance à la corrosion. Toutefois, un tel changement de matériau implique un surcoût considérable.

L'invention qui va maintenant être décrite propose une solution permettant une bonne résistance à la corrosion tout en limitant les coûts.

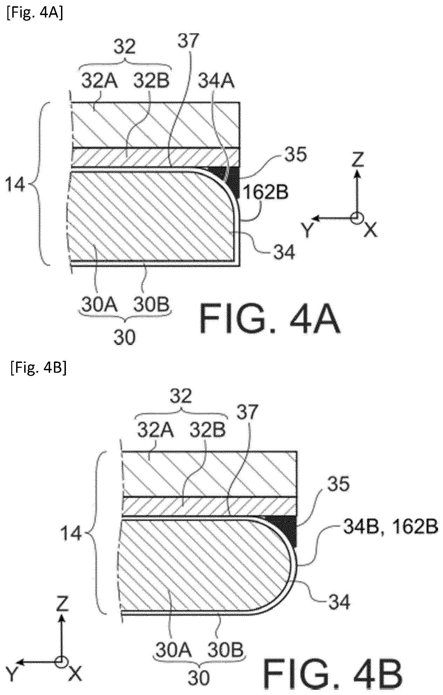

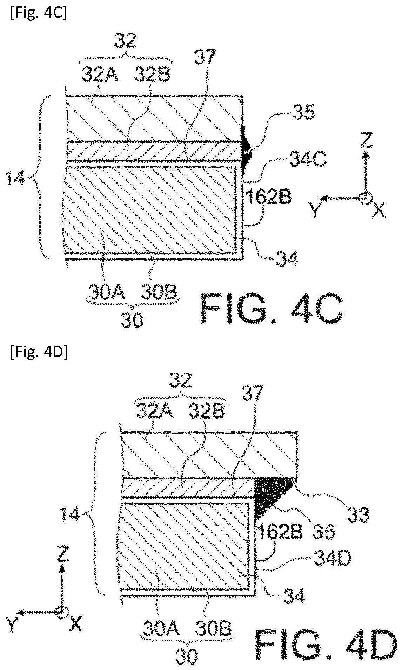

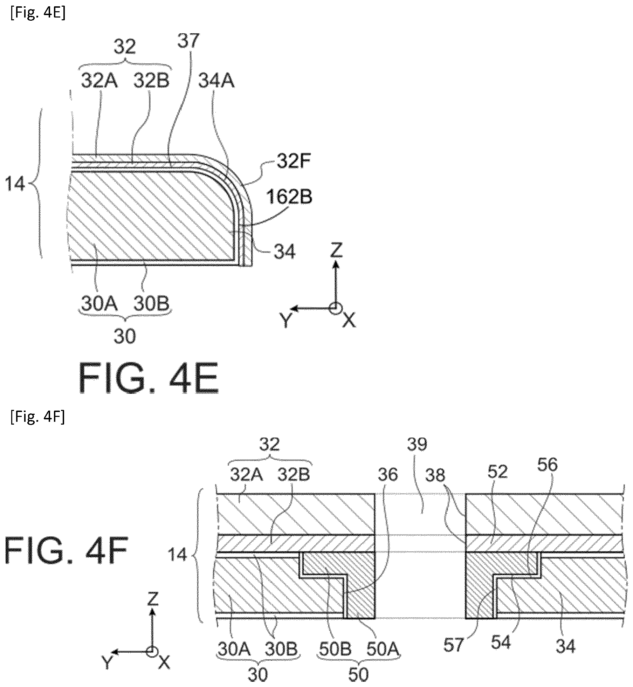

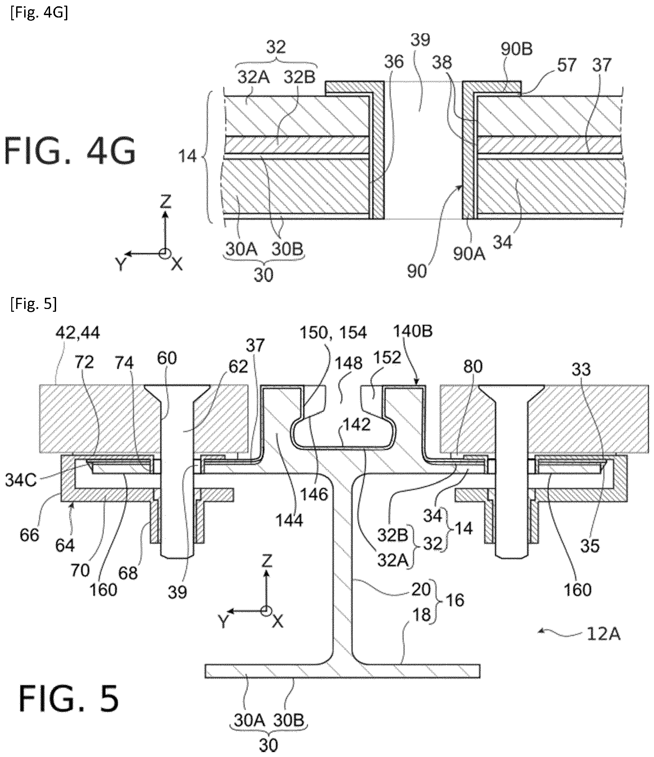

Selon son aspect le plus général, en référence à la figure 4, l'invention propose un rail 12 présentant, comme les rails décrits ci-dessus, une semelle supérieure 14 comprenant une glissière 140B destinée à la fixation d'éléments tels que des sièges, conteneurs ou autres, et deux ailes 160 agencées de part et d'autre de la glissière et destinées à supporter des panneaux de plancher, et une structure de raidissement inférieure 16 raccordée à la semelle supérieure 14.

Un tel rail peut être à glissière en retrait, c'est-à-dire un rail du type illustré sur la figure 3, et correspondant à l'exemple montré sur la figure 4, ou un tel rail peut être à glissière proéminente, c'est-à-dire un rail du type illustré sur la figure 2.

Selon l'invention, un tel rail 12 est formé d'une poutre 30 et d'une protection anticorrosion 32 telles que :
- la poutre 30 définit la structure de raidissement inférieure 16 et une plateforme supérieure 34 raccordée à la structure de raidissement inférieure 16 ;
- la poutre 30 est formée au moins d'un corps 30A réalisé en un premier matériau et définissant la structure de raidissement inférieure 16 et la plateforme supérieure 34 ;
- la protection anticorrosion 32 recouvre intégralement une face supérieure 37 de la plateforme supérieure 34, de sorte que la protection anticorrosion 32 et la plateforme supérieure 34 constituent ensemble la semelle supérieure 14 du rail ;
- la protection anticorrosion 32 est au moins formée d'une feuille de protection 32A, réalisée dans un deuxième matériau plus résistant à la corrosion que le premier matériau, et s'étendant de manière continue d'une extrémité libre latérale 162A de l'une des ailes 160 jusqu'à une extrémité libre latérale 162B de l'autre aile 160, moyennant quoi la feuille de protection 32A recouvre en particulier le fond 142 et les deux flancs 144 de la glissière.

Cette configuration stratifiée de la semelle supérieure 14, comprenant au moins la plateforme supérieure 34 et la feuille de protection 32A dans un état superposé, permet une protection efficace du rail d'ancrage 12 contre la corrosion, tout en permettant que la poutre 30 soit en un matériau au coût limité. Il faut en effet comprendre, par « feuille de protection », un élément solide relativement dur et rigide ayant été disposé sur la plateforme supérieure 34, à la différence des revêtements anticorrosion de l'art antérieur qui sont formés de silicone ou de peinture et qui sont obtenus par dépôt sous forme de bande(s) souple(s) ou sous forme fluide sur le rail, de tels revêtements ayant pour inconvénient d'être mous, dans le cas du silicone, ou d'être très minces, dans le cas de la peinture, comme expliqué ci-dessus.

Le premier matériau, dans lequel est réalisé le corps 30A de la poutre, est typiquement de l'aluminium ou un alliage d'aluminium.

Le deuxième matériau, dans lequel est réalisé la feuille de protection 32A de la protection anticorrosion 32, est avantageusement réalisé en un métal plus « noble », c'est-à-dire plus résistant à la corrosion, que le premier matériau, par exemple en titane ou en un alliage de titane, ou un acier inoxydable.

Du fait de l'utilisation de deux matériaux différents, dont les propriétés en termes de résistance à la corrosion et de coût sont exploitées au mieux, un tel rail peut être dénommé « rail hybride ».

La feuille de protection 32A présente de préférence une épaisseur supérieure à 0,2 mm, plus préférentiellement supérieure à 0,3 mm, et encore plus préférentiellement supérieure à 0,4 mm.

Dans des modes de réalisation de l'invention, en référence à la figure 4, la poutre 30 comprend en outre un revêtement anticorrosion 30B qui recouvre l'intégralité du corps 30A de la poutre. Le revêtement anticorrosion 30B peut selon une forme de réalisation être réalisé par traitement de surface ; à titre illustratif, le traitement de surface comprend une anodisation et l'application d'une peinture anti-corrosion. L'anodisation est par exemple de type sulfo-tartrique ou encore de type sulfurique (à bain d'acide sulfurique). L'application de la peinture anti-corrosion peut être précédée de l'application d'un apprêt et suivie d'une couche de finition. En ce qui concerne la semelle supérieure 14, il faut donc comprendre que, dans un tel cas, le revêtement anticorrosion 30B est intercalé entre le corps 30A de la poutre et la protection anticorrosion 32. Dans un tel cas, la poutre 30, formée du corps 30A et du revêtement anticorrosion 30B, est donc assimilable à un rail de type connu.

De plus, dans des modes de réalisation de l'invention, toujours en référence à la figure 4, la protection anticorrosion 32 peut comprendre en outre une couche de liaison 32B intercalée entre au moins une partie de la feuille de protection 32A et au moins une partie de la plateforme supérieure 34 de la poutre 30. La couche de liaison 32B est donc au contact du revêtement anticorrosion 30B, ou, dans des modes de réalisation qui ne comportent pas ce revêtement, au contact du corps 30A de la poutre.

La couche de liaison 32B assure l'adhésion de la feuille de protection 32A à la plateforme supérieure 34, et est, à cet effet, avantageusement formée d'un mastic, et/ou d'une colle, et/ou d'un scotch double face.

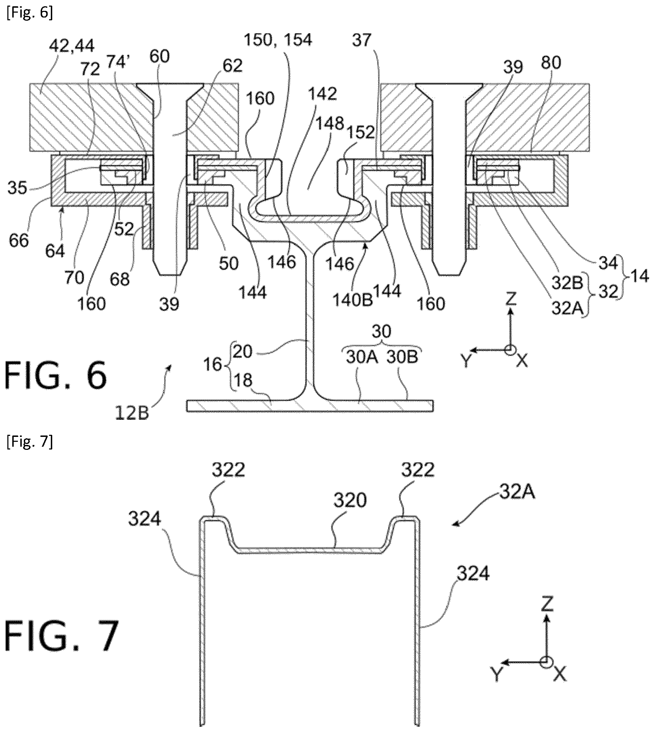

Dans des modes de réalisation préférés, tels que ceux qui vont être décrits dans ce qui suit en référence aux figures 5 et 6, la couche de liaison 32B n'est présente qu'au niveau des ailes 160 et est absente au niveau de la glissière 140A ou 140B. Autrement dit, la feuille de protection 32A est, dans de tels cas, directement au contact de la partie de la plateforme supérieure 34 de la poutre 30 définissant la glissière.

Par ailleurs, la protection de chaque bord latéral de la plateforme supérieure 34 de la poutre 30, notamment contre la pénétration de fluides corrosifs entre la plateforme supérieure 34 et la couche de protection anticorrosion 32, est avantageusement assurée par un agent d'étanchéité 35, tel qu'un mastic ou une colle, disposé :
- soit, dans un espace ménagé entre la protection anticorrosion 32 et la plateforme supérieure 34, du fait que le bord latéral considéré forme un arrondi 34A à la jonction avec la face supérieure de la plateforme (figure 4A) ou forme un arrondi 34B sur l'intégralité du chant de la plateforme (figure 4B) ;
- soit, sous la forme d'un dépôt de matière (figure 4C) rapporté sur un chant plat 34C formé conjointement par le bord latéral considéré de la plateforme supérieure 34 et un bord latéral correspondant de la protection anticorrosion 32 ;
- soit sous la forme d'un dépôt de matière (figure 4D), qui est rapporté sur un chant plat 34D formé par le bord latéral de la plateforme supérieure 34, et le cas échéant, par la couche de liaison 32B de la protection anticorrosion 32, et qui s'étend jusqu'à une face inférieure d'un bord latéral 33 de la feuille de protection 32A de la protection anticorrosion 32 se prolongeant en surplomb au-delà dudit chant plat 34D.

En variante (figure 4E), la plateforme supérieure 34 peut présenter un ou plusieurs bords latéraux formant chacun un arrondi 34A à une jonction entre la face supérieure 37 de la plateforme et le chant correspondant de celle-ci, lesdits arrondis 34A étant recouverts par des bords tombés 32F de la couche de protection anticorrosion 32.

Dans des modes de réalisation de l'invention, en référence à la figure 4, la plateforme supérieure 34 de la poutre 30 et la protection anticorrosion 32 présentent une ou plusieurs paires d'orifices respectifs alignés 36, 38, situés au sein des ailes 160. Deux paires d'orifices de ce type sont ainsi visibles sur la figure 4. Les orifices 36, 38 de chaque paire définissent conjointement un passage traversant 39 au sein de la semelle supérieure 14 du rail 12, permettant le passage d'un organe de fixation (non visible sur la figure 4) destiné, par exemple, à la fixation de panneaux de plancher au rail 12, comme cela apparaîtra plus clairement dans ce qui suit, ou destinés à la fixation de monuments à un plancher comprenant ledit rail 12.

En référence aux figures 4F et 4G, pour chacune des paires d'orifices 36, 38, au moins un segment du passage traversant 39, correspondant à l'orifice 36 de la plateforme supérieure 34, est avantageusement délimité par une douille de protection anticorrosion logée dans l'orifice 36 et permettant d'éviter que le premier matériau constituant la plateforme supérieure 34 ne soit exposé à la corrosion au niveau de la surface interne d'un tel orifice.

Plus particulièrement, la figure 4F illustre une configuration, dite de douille encastrée, dans laquelle une telle douille de protection anticorrosion, référencée 50, est encastrée dans la plateforme supérieure 34 et couverte par une partie 52 de la protection anticorrosion 32 formant un pourtour de l'orifice 38 correspondant de la protection anticorrosion. Dans un tel cas, la douille de protection anticorrosion 50 présente de préférence une portion inférieure 50A de forme cylindrique de révolution, et un rebord supérieur 50B, par exemple de forme annulaire, formant latéralement saillie par rapport à la portion inférieure 50A et définissant un épaulement 54 entre la portion inférieure 50A et le rebord supérieur 50B. De plus, la plateforme supérieure 34 de la poutre 30 présente, autour de l'orifice 36 correspondant, un lamage 56 sur lequel s'appuie l'épaulement 54. Une telle configuration permet la rétention de la douille de protection anticorrosion 50 dans l'orifice 36 correspondant même en l'absence d'organe de fixation dans le passage traversant 39 correspondant.

La figure 4G illustre une autre configuration, dite de douille protubérante, dans laquelle la douille de protection anticorrosion, référencée 90, comporte une portion inférieure 90A, par exemple de forme cylindrique de révolution, qui se prolonge au travers de la protection anticorrosion 32, et un rebord supérieur 90B appliqué sur la protection anticorrosion 32.

De manière générale, une telle douille de protection anticorrosion 50, 90 est réalisée dans un matériau plus résistant à la corrosion que le premier matériau, préférentiellement dans un matériau métallique, par exemple du titane ou un alliage de titane. La douille de protection anticorrosion peut, en variante, être réalisée en polytétrafluoroéthylène (PTFE) ou en tout autre matériau approprié.

Par ailleurs, du mastic 57 (visible uniquement sur les vues à grande échelle des figures 4F et 4G) est avantageusement interposé entre une telle douille et la plateforme supérieure 34 de la poutre 30, dans le cas d'une douille en configuration encastrée, ou entre la douille et l'ensemble de la semelle supérieure 14, dans le cas d'une douille en configuration protubérante. L'interposition du mastic permet, le cas échéant, d'éviter les phénomènes de couplage galvanique entre la douille de protection anticorrosion 50, 90 et la plateforme supérieure 34.

Les figures 5 et 6 illustrent l'utilisation de rails d'ancrage selon l'invention au sein d'un plancher d'aéronef.

La figure 5 illustre une partie d'un plancher 40 comprenant au moins un rail d'ancrage 12A du type à glissière proéminente et des panneaux de plancher 44, selon un mode de réalisation particulier de l'invention.

Les panneaux de plancher 44 présentent des orifices traversants 60 (dont deux sont visibles sur la figure 5), qui sont respectivement alignés avec des passages traversants 39 de la semelle supérieure 14 du rail 12A, et qui sont traversés respectivement par des vis de fixation, telles que des vis de plancher 62 assurant la fixation des panneaux de plancher 44 sur la semelle supérieure 14.

Dans des modes de réalisation de l'invention tels que celui de la figure 5, le plancher 42 comporte, pour chaque vis de plancher 62, un écrou à suspension encliquetée 64, également dénommé « clip nut » d'après la terminologie anglosaxonne. Un tel écrou 64 comporte une pince 66 conformée pour enserrer la semelle supérieure 14 et supporter une portion d'écrou 68 dans laquelle est vissée la vis de plancher 62 correspondante.

À cet effet, la pince 66 présente une section globalement en forme de « C » définissant une patte inférieure 70 agencée sous la semelle supérieure 14 et portant la portion d'écrou 68 qui s'étend vers le bas à partir d'une face inférieure de ladite patte inférieure 70, et une patte supérieure 72 agencée sur la semelle supérieure 14 et portant une douille de centrage 74 s'étendant vers le bas à partir de ladite patte supérieure 72 en étant engagée dans le passage traversant 39 correspondant. La douille de centrage 74 s'étend d'une extrémité à l'autre du passage traversant 39 de la semelle supérieure 14, et constitue ainsi un exemple de douille de protection anticorrosion en configuration protubérante.

Par ailleurs, la protection de chaque bord latéral de la plateforme supérieure 34 de la poutre 30 est assurée par un dépôt d'agent d'étanchéité 35 de la manière illustrée sur la figure 4D.

À titre d'exemple, une bande de remplissage 80, par exemple constituée d'une mousse de silicone auto-adhésive, est en outre agencée sur une région de la semelle supérieure 14 non occupée par les pattes supérieures 72 des écrous 64, et par exemple aussi par-dessus les pattes supérieures 72, de manière à assurer une mise à niveau pour les panneaux de plancher. En variante ou de manière complémentaire, les panneaux de plancher 44 peuvent se déformer de manière à épouser avec plus ou moins de précision le relief créé par les pattes supérieures 72 sur la semelle supérieure 14.

Par ailleurs, en variante, au lieu que la portion d'écrou 68 soit portée par une pince enserrant la semelle supérieure 14, la portion d'écrou 68 peut être portée par une douille insérée à force, depuis le dessous, dans la semelle supérieure 14.

La figure 6 illustre une partie d'un plancher 40 comprenant au moins un rail d'ancrage 12B du type à glissière en retrait et des panneaux de plancher 44, selon un autre mode de réalisation particulier de l'invention.

Dans ce mode de réalisation, la protection de chaque bord latéral de la plateforme supérieure 34 de la poutre 30 est par exemple assurée par un agent d'étanchéité 35 disposé de la manière décrite ci-dessus en référence à la figure 4C.

De plus, chaque orifice 36 de la plateforme supérieure 34 de la poutre 30 est délimité par une douille de protection anticorrosion 50 encastrée dans la plateforme supérieure 34 et couverte par une partie de la protection anticorrosion 32 formant un pourtour 52 de l'orifice 38 de la protection anticorrosion, de la même manière que sur la figure 4F.

La douille de centrage 74' de chaque écrou à suspension encliquetée 64 s'étend vers le bas à partir de la patte supérieure 72 en étant engagée dans le passage traversant 39 correspondant, éventuellement jusque dans la douille de protection anticorrosion 50.

De manière générale, un procédé de fabrication d'un rail 12, 12A, 12B pour plancher d'aéronef du type décrit ci-dessus peut comprendre les étapes suivantes :
- A) mettre à disposition la poutre 30, formée au moins du corps 30A réalisé en le premier matériau et définissant la structure de raidissement inférieure 16 et la plateforme supérieure 34 ;
- B) mettre à disposition la feuille de protection 32A réalisée en le deuxième matériau plus résistant à la corrosion que le premier matériau ; puis
- C) fixer la feuille de protection 32A sur la plateforme supérieure 34 de sorte que la feuille de protection 32A recouvre intégralement la face supérieure 37 de la plateforme supérieure 34.

Le cas échéant, l'étape A comprend, après une sous-étape a1 de mise à disposition du corps 30A, une sous-étape a2 de perçage des orifices 36 au travers de la plateforme supérieure 34 (en l'occurrence, au travers de la partie du corps 30A constituant initialement la plateforme supérieure 34), et, le cas échéant, la formation des lamages 56.

Le cas échéant, l'étape A comprend ensuite une sous-étape a3 d'anodisation du corps 30A puis/ou une sous-étape a4 d'application du revêtement anticorrosion 30B sur le corps 30A (éventuellement après application d'un apprêt sur ce dernier).

Le cas échéant, l'étape B peut comprendre, après une sous-étape b1 de mise à disposition de la feuille de protection 32A, une sous-étape b2 de perçage des orifices 38 au travers de la feuille de protection 32A.

L'étape C comprend par exemple une sous-étape c1 de dépôt de la couche de liaison 32B sur la plateforme supérieure 34, sous forme fluide dans le cas où cette couche de liaison est formée de mastic ou de colle, ou sous forme solide dans le cas où cette couche de liaison est formée de scotch double face.

Dans ce cas, l'étape C comprend ensuite une sous-étape c2 ayant pour but de mettre en place et fixer la feuille de protection 32A sur la couche de liaison 32B.

En variante, la sous-étape c1 peut être omise, auquel cas la sous-étape c2 a pour but de mettre en place et fixer la feuille de protection 32A directement sur la plateforme 34.

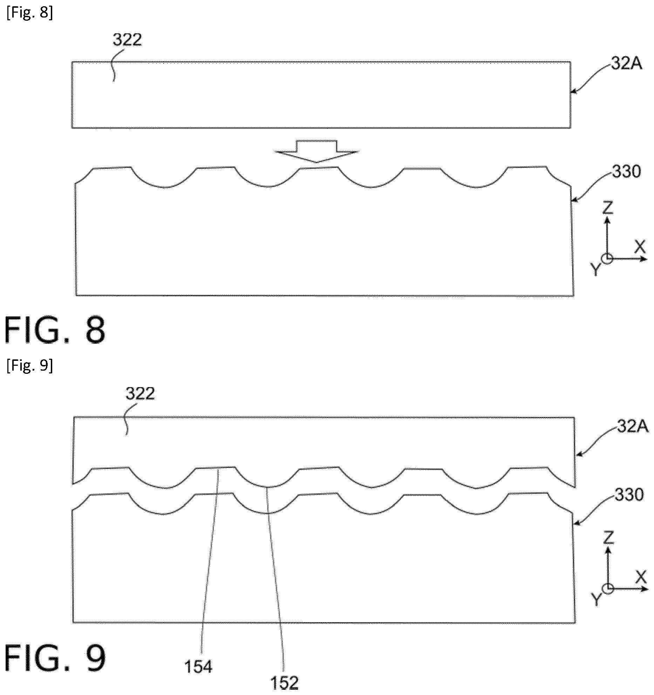

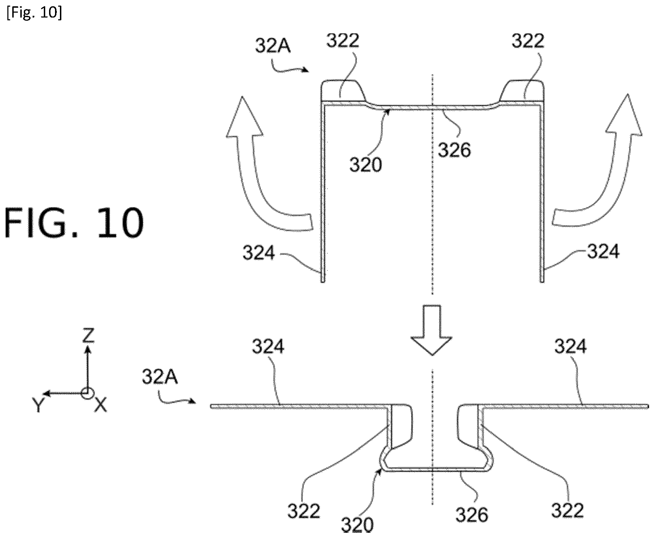

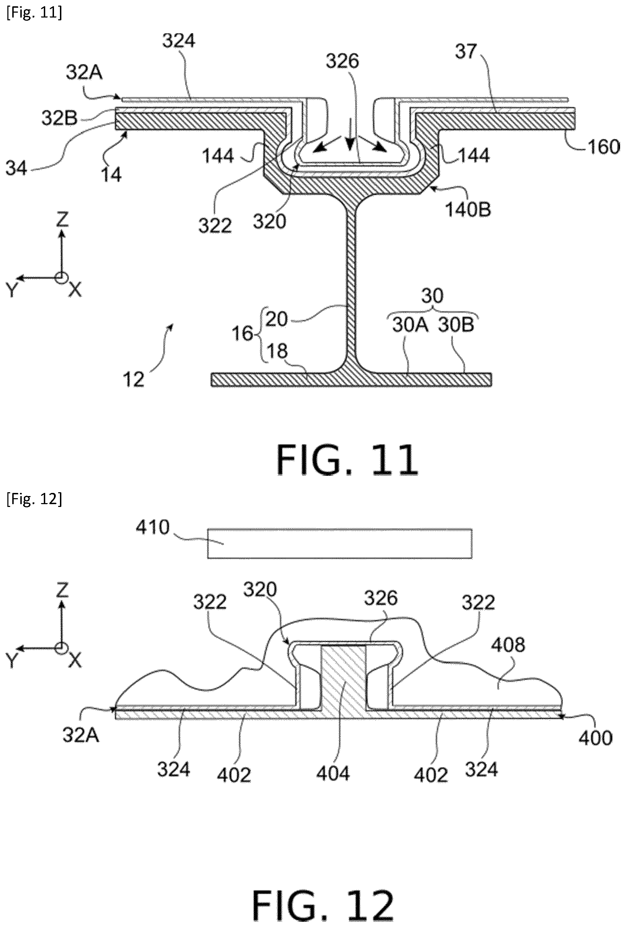

Dans un mode de réalisation particulier de l'invention, en référence aux figures 7 à 11, la sous-étape c2 comprend :
- c2-i) préformer, par une technique de roulage, la feuille de protection 32A de sorte à lui faire adopter une forme (figure 7) comprenant une partie médiane 320, par exemple de forme plane à ce stade du procédé, délimitée latéralement par deux bourrelets opposés 322 s'étendant en saillie vers un premier côté par rapport à la partie médiane et se prolongeant respectivement par deux lames terminales 324 en vis-à-vis l'une de l'autre s'étendant en direction d'un second côté opposé au premier côté, par exemple selon une direction orthogonale à la partie médiane 320 ; puis
- c2-ii) former à froid les dents 152 et évidements 154 dans les bourrelets 322 (figures 9 et 10) par une technique d'emboutissage, c'est-à-dire en pressant la feuille de protection 32A préalablement préformée contre une matrice 330 (figure 8) ; puis
- c2-iii) plier la feuille de protection 32A ainsi préparée de manière à ramener les lames terminales 324 dans une configuration parallèle à une partie centrale 326 de la partie médiane 320 (figure 10) ; puis
- c2-iv) appliquer et fixer la feuille de protection 32A ainsi définie sur la plateforme supérieure 34 éventuellement recouverte en tout ou partie par la couche de liaison 32B, en donnant une forme définitive à la feuille de protection 32A au moyen d'une technique d'élastoformage, c'est-à-dire en utilisant un poinçon en matériau élastomère de forme sensiblement complémentaire à la glissière, ou au moyen d'une technique d'hydroformage, c'est-à-dire en soumettant la feuille de protection 32A préalablement logée dans la glissière à de l'eau sous pression (figure 11). Dans les deux cas, la pression (symbolisée par les flèches sur la figure 11) exercée par le poinçon ou par l'eau permet d'amener la feuille de protection 32A au contact de la plateforme supérieure 34 et/ou, le cas échéant, de la couche de liaison 32B.

Les lames terminales 324 définissent ainsi la surface supérieure de chacune des ailes 160 de la semelle supérieure 14, tandis que la partie centrale 326 de la partie médiane 320 définit la surface supérieure du fond 142 de la glissière, et que les bourrelets 322 définissent les lèvres de rétention 146.

Dans d'autres modes de réalisation de l'invention, l'étape A comprend la mise à disposition d'une quantité du premier matériau pour permettre une réalisation ultérieure de la poutre 30, et l'étape C comprend la préparation de la feuille de protection 32A, par exemple au moyen des étapes c2-i à c2-iii ci-dessus, le recouvrement éventuel de la feuille de protection 32A ainsi préparée au moyen de la couche de liaison 32B, puis la formation de la poutre 30 par tout procédé de métallurgie approprié, dans lequel la feuille de protection 32A joue le rôle de matrice.

À cet effet, en référence à la figure 12, la feuille de protection 32A est par exemple placée, à l'envers, sur un support 400 comprenant des parties latérales 402 adaptées pour supporter les lames terminales 324 et une partie médiane 404 conformée pour pouvoir être insérée entre les bourrelets 322 de manière à être en contact avec la partie centrale 326 de la partie médiane 320.

Le cas échéant, la couche de liaison 32B (non visible sur la figure 12) est déposée sur tout ou partie de la feuille de protection 32A.

Le premier matériau 408 est ensuite amené par tout moyen approprié sur la feuille de protection 32A, éventuellement recouverte en tout ou partie par la couche de liaison 32B. Le premier matériau, à l'état liquide par exemple dans le cadre d'un procédé de fonderie, ou à l'état de poudre par exemple dans le cadre d'un procédé de compactage, est ensuite mis en forme au moyen d'éléments de moulage et/ou d'éléments de pressage 410 (illustrés très schématiquement), pour aboutir à la poutre 30.

Par ailleurs, quel que soit le type de procédé utilisé pour réaliser la poutre 30, l'étape C peut comprendre la mise en place d'une ou plusieurs douilles de protection anticorrosion 50, en configuration de douille encastrée, dans les orifices 36 de la plateforme supérieure 34.

Le cas échéant, l'étape C peut comprendre la solidification de la couche de liaison 32B.

Enfin, le cas échéant, l'étape C peut comprendre la mise en place d'une ou plusieurs douilles de protection anticorrosion 90, en configuration de douille protubérante, dans les passages traversants 39 de la semelle supérieure 14.

## Revendications

1. Rail d'ancrage (12, 12A, 12B) pour plancher d'aéronef, comprenant :
- une semelle supérieure (14) comprenant une glissière (140A, 140B) destinée à l'ancrage d'éléments de fixation, et deux ailes (160) agencées de part et d'autre de la glissière et destinées à supporter des panneaux de plancher (44), et
- une structure de raidissement inférieure (16) raccordée à la semelle supérieure (14), le rail étant formé :
- d'une poutre (30), formée au moins d'un corps (30A) réalisé en un premier matériau, et définissant la structure de raidissement inférieure (16) et une plateforme supérieure (34) ; et
- d'une protection anticorrosion (32) recouvrant intégralement une face supérieure (37) de la plateforme supérieure (34) de sorte que la protection anticorrosion (32) et la plateforme supérieure (34) constituent ensemble la semelle supérieure (14) du rail,
**caractérisé en ce que**
la protection anticorrosion (32) est au moins formée d'une feuille de protection (32A), un élément solide, dur et rigide disposé sur la plateforme supérieure (34), réalisée en un deuxième matériau plus résistant à la corrosion que le premier matériau, et s'étendant de manière continue d'une extrémité libre latérale de l'une des ailes (160) jusqu'à une extrémité libre latérale de l'autre aile (160), moyennant quoi la feuille de protection (32A) recouvre un fond (142) et deux flancs (144), opposés l'un à l'autre, de la glissière (140A, 140B).

2. Rail selon la revendication 1, dans lequel le premier matériau est de l'aluminium ou un alliage d'aluminium et/ou dans lequel le deuxième matériau est choisi parmi le titane ou un alliage de titane, et un acier inoxydable.

3. Rail selon la revendication 1 ou 2, dans lequel la plateforme supérieure (34) de la poutre (30) et la protection anticorrosion (32) présentent au moins une paire d'orifices respectifs (36, 38) alignés définissant conjointement un passage traversant (39) s'étendant au travers de la semelle supérieure (14) du rail (12, 12A, 12B) pour un organe de fixation.

4. Rail selon la revendication 3, comprenant une douille de protection anticorrosion (50, 74, 74') logée au moins dans l'orifice (36) de la plateforme supérieure (34) de la poutre (30) et délimitant au moins un segment du passage traversant (39).

5. Rail selon l'une quelconque des revendications 1 à 4, dans lequel la poutre (30) comprend en outre un revêtement anticorrosion (30B) qui recouvre l'intégralité du corps (30A) de la poutre, moyennant quoi le revêtement anticorrosion (30B) est intercalé entre le corps (30A) de la poutre et la protection anticorrosion (32) au niveau de la semelle supérieure (14).

6. Rail selon l'une quelconque des revendications 1 à 5, dans lequel la protection anticorrosion (32) comprend en outre une couche de liaison (32B) intercalée entre au moins une partie de la feuille de protection (32A) et au moins une partie de la plateforme supérieure (34) de la poutre (30).

7. Rail selon l'une quelconque des revendications 1 à 6, dans lequel au moins un bord latéral de la plateforme supérieure (34) de la poutre (30) est protégé contre la pénétration de fluides corrosifs entre la plateforme supérieure (34) et la couche de protection anticorrosion (32) au moyen d'un agent d'étanchéité (35) disposé :
- soit dans un espace ménagé entre la protection anticorrosion (32) et la plateforme supérieure (34), du fait que le bord latéral forme un arrondi (34A) à une jonction entre la face supérieure de la plateforme et un chant correspondant de la plateforme, ou forme un arrondi (34B) sur l'intégralité d'un chant de la plateforme ;
- soit sous la forme d'un dépôt de matière rapporté sur un chant plat (34C) formé conjointement par le bord latéral de la plateforme supérieure (34) et un bord latéral correspondant de la protection anticorrosion (32) ;
- soit sous la forme d'un dépôt de matière, qui est rapporté sur un chant plat (34D) formé au moins par le bord latéral de la plateforme supérieure (34), et qui s'étend jusqu'à une face inférieure d'un bord latéral (33) de la feuille de protection (32A) de la protection anticorrosion (32) se prolongeant en surplomb au-delà dudit chant plat (34D).

8. Rail selon l'une quelconque des revendications 1 à 7, dans lequel la plateforme supérieure (34) présente au moins un bord latéral formant un arrondi (34A) à une jonction entre la face supérieure (37) de la plateforme et un chant correspondant de la plateforme, ledit arrondi (34A) étant recouvert par un bord tombé de la couche de protection anticorrosion (32).

9. Plancher pour aéronef, comprenant des panneaux (44), et au moins un rail (12, 12A, 12B) selon l'une quelconque des revendications 1 à 8 dont les ailes (160) de la semelle supérieure (14) supportent les panneaux (44).

10. Aéronef, comprenant au moins un plancher selon la revendication 9, et au moins un élément de fixation ancré dans la glissière (140A, 140B) du rail (12, 12A, 12B).

11. Procédé de fabrication d'un rail d'ancrage (12) pour plancher d'aéronef selon l'une quelconque des revendications 1 à 8, comprenant au moins les étapes suivantes :
- A) mettre à disposition la poutre (30), formée au moins du corps (30A) réalisé en le premier matériau et définissant la structure de raidissement inférieure (16) et la plateforme supérieure (34), ou mettre à disposition une quantité du premier matériau (408) adaptée à une réalisation ultérieure de la poutre (30) ;
- B) mettre à disposition la feuille de protection (32A) réalisée en le deuxième matériau plus résistant à la corrosion que le premier matériau ; puis
- C) réaliser la semelle (14) au moyen de la feuille de protection (32A), et de la poutre (30) ou d'une partie au moins de ladite quantité du premier matériau (408).

12. Procédé selon la revendication 11, dans lequel l'étape C comprend au moins :
- c2-i) préformer, par une technique de roulage, la feuille de protection (32A) de sorte à lui faire adopter une forme comprenant une partie médiane (320) délimitée latéralement par deux bourrelets opposés (322) s'étendant en saillie vers un premier côté par rapport à la partie médiane et se prolongeant respectivement par deux lames terminales (324) en vis-à-vis l'une de l'autre s'étendant en direction d'un second côté opposé au premier côté ; puis
- c2-iii) plier la feuille de protection (32A) ainsi préparée de manière à ramener les lames terminales (324) dans une configuration parallèle à une partie centrale (326) de la partie médiane (320).

13. Procédé selon la revendication 11 ou 12, dans lequel l'étape A comprend la mise à disposition de la poutre (30), et dans lequel l'étape C comprend :
- c2-iv) appliquer et fixer la feuille de protection (32A) sur la plateforme supérieure (34), en donnant une forme définitive à la feuille de protection (32A) au moyen d'une technique d'élastoformage ou au moyen d'une technique d'hydroformage.

14. Procédé selon la revendication 11 ou 12, dans lequel l'étape A comprend la mise à disposition de ladite quantité du premier matériau (408), et dans lequel l'étape C comprend la formation de la poutre (30) par un procédé de métallurgie dans lequel la feuille de protection (32A) joue le rôle de matrice.

## Patentansprüche

1. Verankerungsschiene (12, 12A, 12B) für einen Flugzeugboden, umfassend:
- einen Obergurt (14), der eine Gleitbahn (140A, 140B) umfasst, die zur Verankerung von Befestigungselementen bestimmt ist, und zwei Schenkel (160), die beidseits der Gleitbahn angeordnet sind und dazu bestimmt sind, Bodenplatten (44) zu tragen, und
- eine untere Aussteifungsstruktur (16), die mit dem Obergurt (14) verbunden ist,
wobei die Schiene gebildet wird:
- aus einem Träger (30), der mindestens aus einem Körper (30A) gebildet ist, der aus einem ersten Material ausgeführt ist, und die untere Aussteifungsstruktur (16) und eine obere Plattform (34) definiert; und
- aus einem Antikorrosionsschutz (32), der eine Oberseite (37) der oberen Plattform (34) vollständig bedeckt, so dass der Antikorrosionsschutz (32) und die obere Plattform (34) gemeinsam den Obergurt (14) der Schiene bilden,
**dadurch gekennzeichnet, dass** der Antikorrosionsschutz (32) mindestens aus einer Schutzfolie (32A), einem festen, harten und steifen Element, das auf der oberen Plattform (34) angeordnet ist, gebildet wird, die aus einem zweiten Material ausgeführt ist, das korrosionsbeständiger als das erste Material ist, und sich durchgehend von einem seitlichen freien Ende eines der Schenkel (160) bis zu einem seitlichen freien Ende des anderen Schenkels (160) erstreckt, wodurch die Schutzfolie (32A) einen Boden (142) und zwei zueinander entgegengesetzte Seitenwände (144) der Gleitbahn (140A, 140B) bedeckt.

2. Schiene nach Anspruch 1, bei der das erste Material Aluminium oder eine Aluminiumlegierung ist und/oder bei der das zweite Material unter Titan oder einer Titanlegierung und einem Edelstahl gewählt ist.

3. Schiene nach Anspruch 1 oder 2, bei der die obere Plattform (34) des Trägers (30) und der Antikorrosionsschutz (32) mindestens ein Paar jeweilige fluchtende Öffnungen (36, 38) aufweisen, die gemeinsam eine Durchgangspassage (39), die sich durch den Obergurt (14) der Schiene (12, 12A, 12B) hindurch erstreckt, für ein Befestigungselement definieren.

4. Schiene nach Anspruch 3, umfassend eine Antikorrosionsschutzhülse (50, 74, 74'), die mindestens in der Öffnung (36) der oberen Plattform (34) des Trägers (30) aufgenommen ist und mindestens ein Segment der Durchgangspassage (39) begrenzt.

5. Schiene nach einem der Ansprüche 1 bis 4, bei welcher der Träger (30) ferner einen Antikorrosionsüberzug (30B) umfasst, der den gesamten Körper (30A) des Trägers bedeckt, wodurch der Antikorrosionsüberzug (30B) am Obergurt (14) zwischen dem Körper (30A) des Trägers und dem Antikorrosionsschutz (32) liegt.

6. Schiene nach einem der Ansprüche 1 bis 5, bei welcher der Antikorrosionsschutz (32) ferner eine Verbindungsschicht (32B) umfasst, die zwischen mindestens einem Teil der Schutzfolie (32A) und mindestens einem Teil der oberen Plattform (34) des Trägers (30) liegt.

7. Schiene nach einem der Ansprüche 1 bis 6, bei der mindestens ein seitlicher Rand der oberen Plattform (34) des Trägers (30) vor dem Eindringen von korrosiven Flüssigkeiten zwischen der oberen Plattform (34) und der Antikorrosionsschutzschicht (32) mittels eines Abdichtungsmittels (35) geschützt ist, das angeordnet ist:
- entweder in einem Raum, der zwischen dem Antikorrosionsschutz (32) und der oberen Plattform (34) ausgebildet ist, aufgrund der Tatsache, dass der seitliche Rand eine Rundung (34A) an einem Übergang zwischen der Oberseite der Plattform und einer entsprechenden Kante der Plattform bildet oder eine Rundung (34B) über die gesamte Kante der Plattform bildet;
- oder in Form eines Materialauftrags, der auf eine flache Kante (34C) aufgetragen ist, die gemeinsam durch den seitlichen Rand der oberen Plattform (34) und einen entsprechenden seitlichen Rand des Antikorrosionsschutzes (32) gebildet wird;
- oder in Form eines Materialauftrags, der auf eine flache Kante (34D) aufgetragen ist, die mindestens durch den seitlichen Rand der oberen Plattform (34) gebildet wird, und der sich bis zu einer Unterseite eines seitlichen Rands (33) der Schutzfolie (32A) des Antikorrosionsschutzes (32) erstreckt, der sich auskragend über die flache Kante (34D) hinaus fortsetzt.

8. Schiene nach einem der Ansprüche 1 bis 7, bei der die obere Plattform (34) mindestens einen seitlichen Rand aufweist, der eine Rundung (34A) an einem Übergang zwischen der Oberseite (37) der Plattform und einer entsprechenden Kante der Plattform bildet, wobei die Rundung (34A) durch einen abfallenden Rand der Antikorrosionsschutzschicht (32) bedeckt wird.

9. Boden für ein Flugzeug, umfassend Platten (44) und mindestens eine Schiene (12, 12A, 12B) nach einem der Ansprüche 1 bis 8, deren Schenkel (160) des Obergurts (14) die Platten (44) tragen.

10. Flugzeug, umfassend mindestens einen Boden nach Anspruch 9 und mindestens ein Befestigungselement, das in der Gleitbahn (140A, 140B) der Schiene (12, 12A, 12B) verankert ist.

11. Verfahren zur Herstellung einer Verankerungsschiene (12) für einen Flugzeugboden nach einem der Ansprüche 1 bis 8, umfassend mindestens die folgenden Schritte:
- A) Bereitstellen des Trägers (30), der mindestens aus dem Körper (30A) gebildet ist, der aus dem ersten Material ausgeführt ist, und die untere Aussteifungsstruktur (16) und die obere Plattform (34) definiert, oder Bereitstellen einer Menge des ersten Materials (408), die für eine spätere Ausführung des Trägers (30) geeignet ist;
- B) Bereitstellen der Schutzfolie (32A), die aus dem zweiten Material ausgeführt ist, das korrosionsbeständiger als das erste Material ist; dann
- C) Ausführen des Gurts (14) mittels der Schutzfolie (32A) und des Trägers (30) oder mindestens eines Teils der Menge des ersten Materials (408).

12. Verfahren nach Anspruch 11, bei dem der Schritt C mindestens umfasst:
- c2-i) Vorformen, mit einer Einrolltechnik, der Schutzfolie (32A), so dass sie eine Form annimmt, die einen Mittelteil (320) umfasst, der seitlich durch zwei entgegengesetzte Wülste (322) begrenzt wird, die sich in Bezug auf den Mittelteil zu einer ersten Seite hin abstehend erstrecken und sich mit zwei jeweiligen, einander gegenüber liegenden Endbändern (324) fortsetzen, die sich in Richtung einer zweiten Seite, die zu der ersten Seite entgegengesetzt ist, erstrecken; dann
- c2-iii) Biegen der so vorbereiteten Schutzfolie (32A), so dass die Endbänder (324) in eine parallel zu einem zentralen Teil (326) des Mittelteils (320) verlaufende Gestalt gebracht werden.

13. Verfahren nach Anspruch 11 oder 12, bei dem der Schritt A das Bereitstellen des Trägers (30) umfasst und bei dem der Schritt C umfasst:
- c2-iv) Auflegen und Fixieren der Schutzfolie (32A) auf der oberen Plattform (34), indem der Schutzfolie (32A) mittels einer Elastoforming- oder mittels einer Hydroforming-Technik eine endgültige Form gegeben wird.

14. Verfahren nach Anspruch 11 oder 12, bei dem der Schritt A das Bereitstellen der Menge des ersten Materials (408) umfasst und bei dem der Schritt C das Bilden des Trägers (30) mit einem Metallurgieverfahren umfasst, bei dem die Schutzfolie (32A) die Matritzenrolle spielt.

## Claims

1. Anchor rail (12, 12A, 12B) for an aircraft floor, comprising:
- an upper flange (14) comprising a guideway (140A, 140B) intended for anchoring fixing elements, and two flange wings (160) arranged one on each side of the guideway and intended to support floor panels (44), and
- a lower stiffening structure (16) connected to the upper flange (14),
the rail being formed:
- of a beam (30) formed at least of a body (30A) made of a first material and defining the lower stiffening structure (16) and an upper platform (34); and
- of an anti-corrosion protection (32) wholly covering an upper face (37) of the upper platform (34) so that the anti-corrosion protection (32) and the upper platform (34) together constitute the upper flange (14) of the rail,
**characterized in that**
the anti-corrosion protection (32) is at least formed of a protective sheet (32A), a hard and rigid solid element placed on the upper platform (34), made of a second material more resistant to corrosion than the first material and extending continuously from one lateral free end of one of the flange wings (160) as far as a lateral free end of the other flange wing (160) and by means of which the protective sheet (32A) covers a bottom (142) and two mutually opposite side walls (144) of the guideway (140A, 140B).

2. Rail according to Claim 1, wherein the first material is aluminium or an aluminium alloy and/or wherein the second material is selected from titanium or a titanium alloy, and a stainless steel.

3. Rail according to Claim 1 or 2, wherein the upper platform (34) of the beam (30) and the anti-corrosion protection (32) have at least a pair of aligned respective orifices (36, 38) together defining a through-passage (39) extending through the upper flange (14) of the rail (12, 12A, 12B) for a fastener.

4. Rail according to Claim 3, comprising an anti-corrosion protection bushing (50, 74, 74') housed at least in the orifice (36) of the upper platform (34) of the beam (30) and delimiting at least a segment of the through-passage (39).

5. Rail according to any one of Claims 1 to 4, wherein the beam (30) further comprises an anti-corrosion coating (30B) which covers the entirety of the body (30A) of the beam, and by means of which the anti-corrosion coating (30B) is interposed between the body (30A) of the beam and the anti-corrosion protection (32) at the upper flange (14).

6. Rail according to any one of Claims 1 to 5, wherein the anti-corrosion protection (32) further comprises a tack coat layer (32B) interposed between at least part of the protective sheet (32A) and at least part of the upper platform (34) of the beam (30).

7. Rail according to any one of Claims 1 to 6, wherein at least a lateral edge of the upper platform (34) of the beam (30) is protected against the ingress of corrosive fluids between the upper platform (34) and the anti-corrosion protection layer (32) by means of a sealant (35) arranged:
- either in a space formed between the anti-corrosion protection (32) and the upper platform (34), as a result of the lateral edge forming a rounded portion (34A) at a junction between the upper face of the platform and a corresponding edge face of the platform, or forming a rounded portion (34B) over the entirety of an edge face of the platform;
- or in the form of a deposit of material added to a flat edge face (34C) formed jointly by the lateral edge of the upper platform (34) and a corresponding lateral edge of the anti-corrosion protection (32);
- or in the form of a deposit of material which is added to a flat edge face (34D) formed at least by the lateral edge of the upper platform (34) and which extends as far as an underside face of a lateral edge (33) of the protective sheet (32A) of the anti-corrosion protection (32) which extends as an overhang beyond said flat edge face (34D).

8. Rail according to any one of Claims 1 to 7, wherein the upper platform (34) has at least one lateral edge forming a rounded portion (34A) at a junction between the upper face (37) of the platform and a corresponding edge face of the platform, said rounded portion (34A) being covered by a turned-over edge of the anti-corrosion protection layer (32).

9. Aircraft floor comprising panels (44) and at least one rail (12, 12A, 12B) according to any one of Claims 1 to 8 of which the flange wings (160) of the upper flange (14) support the panels (44).

10. Aircraft comprising at least one floor according to Claim 9 and at least one fixing element anchored in the guideway (140A, 140B) of the rail (12, 12A, 12B).

11. Method for manufacturing an anchor rail (12) for an aircraft floor according to any one of Claims 1 to 8, comprising at least the following steps:
- A) procuring the beam (30), formed at least of the body (30A) made of the first material and defining the lower stiffening structure (16) and the upper platform (34), or procuring a quantity of the first material (408) suitable for subsequent production of the beam (30);
- B) procuring the protective sheet (32A) made of the second material more resistant to corrosion than the first material; then
- C) creating the flange (14) by means of the protective sheet (32A) and of the beam (30) or of at least some of said quantity of the first material (408).

12. Method according to Claim 11, wherein step C comprises at least:
- c2-i) using a rolling technique, preforming the protective sheet (32A) so as to cause it to adopt a shape comprising a middle part (320) delimited laterally by two opposite ridges (322) projecting out towards a first side with respect to the middle part and extended respectively by two terminal blades (324) facing one another and extending in the direction of a second side opposite to the first side; then
- c2-iii) bending the protective sheet (32A) thus prepared so as to bring the terminal blades (324) into a configuration parallel to a central part (326) of the middle part (320).

13. Method according to Claim 11 or 12, wherein step A comprises procuring the beam (30), and wherein step C comprises:
- c2-iv) applying and fixing the protective sheet (32A) to the upper platform (34), giving the protective sheet (32A) a definitive shape using an elastoforming technique or using a hydroforming technique.

14. Method according to Claim 11 or 12, wherein step A comprises procuring said quantity of the first material (408), and wherein step C comprises forming the beam (30) using a metal-working process in which the protective sheet (32A) acts as die.
